# EUROPEAN PATENT SPECIFICATION

(11) **EP 3 446 520 B1**
(45) Date of publication and mention of the grant of the patent: **07.06.2023**
(21) Application number: 17720015.1
(22) Date of filing: 11.04.2017
(51) Int. Cl.: H04W 48/18, H04W 48/14, H04W 48/12

(54) **RADIO RESOURCE CONTROL PROCEDURE FOR QUERY OF SERVICE PROVIDERS**
FUNKRESSOURCENSTEUERUNGSVERFAHREN ZUR ABFRAGE VON DIENSTANBIETERN
PROCÉDURE DE COMMANDE DE RESSOURCE RADIOÉLECTRIQUE POUR INTERROGER DES FOURNISSEURS DE SERVICE

(30) Priority: 20.04.2016 US 201615134042
(43) Date of publication of application: 27.02.2019
(73) Proprietor: Nokia Solutions and Networks Oy, 02610 Espoo (FI)
(72) Inventor: RINNE, Mika Petri Olavi, 02320 Espoo (FI); MUSTAJARVI, Jari Pekka, 02730 Espoo (FI)
(74) Representative: Nokia EPO representatives
(86) International application number: PCT/EP2017/058632
(87) International publication number: WO 2017/182324

(56) References cited:
- EP-A1- 1 670 275
- EP-A1- 2 071 879
- WO-A1-2017/103256
- GB-A- 2 346 507
- US-A1- 2015 327 141
- Sassan Ahmadi: "LTE-Advanced", 31 October 2013 (2013-10-31), Academic Press, Oxford, UK, XP002771324, ISBN: 9780124051621 pages 574-575, Page 575, paragraph "Format 1A"

## Description

### BACKGROUND:

### Field:

Various communication systems may benefit from improved network connectivity through an available service provider. For example, certain communication systems may benefit from informing a user equipment of the available service providers without having to first establish a radio resource control (RRC) connection.

### Description of the Related Art:

In an end-to-end system, a network architecture can include a radio access network (RAN), for example, a MulteFire RAN, that may be connected to either a 3^{rd} Generation Partnership Project (3GPP) evolved packet core network (EPC) or to a neutral host network (NHN). The network may be, for example, a traditional Long Term Evolution (LTE) network or a MulteFire Alliance. A RAN connected to the 3GPP EPC can be in a public land mobile network (PLMN) access mode, while a RAN connected to the NHN can be in an NHN access mode. These access modes are defined in a MulteFire Alliance (MFA), for example, and can be additional to, or different from the latest 3GPP specifications. Other forums, such as the 3GPP, may also define or re-define these mechanisms.

The NHN may support multiple participating service providers (PSPs). A user equipment (UE) accessing the NHN may be able to retrieve partial or short hand information about service providers who offer authentication and connectivity via the network. One network may support multiple PSPs, from which the UE may select one. The information of which PSPs are supported by the network may impact the network selection by the UE.

Because information about the available PSPs may be of use to the UE, System Information (SI) of a given cell may need to include a list of PSPs. PSPs are identified by their names which can be long, domain-like names. SI resources, however, may be scarce because SI may need to be transmitted with full coverage power. In addition, when operating on unlicensed band or any kind of shared licensed band or white spaces spectrum, listen-before-talk (LBT) may be needed before every SI transmission burst. Further, the information elements of an SI burst may need to be periodically available because the network may not be aware when the UE needs any SI. Therefore it is practical that only short form PSP-IDs are broadcast as part of the SI or that only a partial listing of the most used PSPs are offered, instead of a comprehensive list.

Patent application EP 2071 879 A1 describes a query mechanism for retrieving service-specific data associated with one or more mobile telecommunication service providers.

### SUMMARY:

The invention is embodied in the method for sending from a user equipment a radio resource control query request message to a network entity of a neutral host network according to independent claim 1.The invention is also embodied in the corresponding device of independent claim 13. The invention is further embodied in the method for receiving from a user equipment a radio resource control query request message at a network entity of a neutral host network according to independent claim 12 and to the related device of independent claim 14. Finally the invention is embodied in the computer program product of independent claim 15.

### BRIEF DESCRIPTION OF THE DRAWINGS:

For proper understanding of the invention, reference should be made to the accompanying drawings, wherein:
Figure 1A illustrates a signal flow diagram according to certain embodiments.
Figure 1B illustrates a signal flow diagram according to certain embodiments.
Figure 2 illustrates a flow diagram according to certain embodiments.
Figure 3 illustrates a flow diagram according to certain embodiments.
Figure 4A illustrates an embodiment of an RRC Connection Request message.
Figure 4B illustrates an embodiment of an RRC Query according to certain embodiments.
Figure 4C illustrates an embodiment of an RRC Query according to certain embodiments.
Figure 4D illustrates an embodiment of an RRC Query according to certain embodiments.
Figure 5 illustrates a system diagram according to certain embodiments.

### DETAILED DESCRIPTION:

The invention is defined by the appended independent claims while the following description is intended for illustration purposes only. Certain embodiments can provide a mechanism for the UE to retrieve query information, such as long form PSP information from the network. The retrieval and selection process can occur before a connection to the network is established. Certain embodiments may also be capable of providing as many PSPs as are available in the network, with each PSP having any amount of length. In some embodiments though, a maximum length may be provided, with the maximum length being either predetermined or set by the network.

In addition, certain embodiments may operate in a Long Term Evolution (LTE) network which operates on an unlicensed frequency band. In other examples, the frequency band may be a kind of shared licensed band or white spaces spectrum. In such an embodiment, the UE may benefit from being informed of the available service providers. The UE can receive requested query information, such as a full service provider list with long form information relating to the available service providers. Once received, the UE may then select an available service provider for connection to the network. Different networks may have different participating service providers.

In certain embodiments a UE may not have sufficient information about the participating service providers in a network. For example, the SI may not include PSPs or may include only a partial list of the PSPs. In yet another example, the SI may include only PSP identifications in the short form, though the UE may need the PSP identifications in their long form. The UE can also for any reason decide not to search PSP lists from the SI. In such examples, the SI does not provide the UE with an adequate PSP list. A query procedure may then be executed by the UE when it does not yet have sufficient information on the PSPs offered by a network.

The query procedures may be incorporated into a radio resource control (RRC) procedure. In other embodiments, the query procedure may be incorporated into other procedures, for example, a non-Access Stratum (NAS). The RRC query may occur in a state where the UE selects a cell from which to access a network. The UE may send a network entity a query about the available PSPs in the cell. The selection of the service provider can be determined by the UE based on at least one selection criterion.

The user of the UE, or the UE, may have pre-configured PSP selection preferences so that the UE itself may in certain embodiments automatically select a preferred PSP. The UE may also present the PSP list to the user for manual selection. In some embodiments, the UE may present those PSPs for which the UE has credentials. Each credential is bound to a PSP, and the UE may have multiple credentials. If at least one of the selection criteria is met, and the UE decides to access the network, the UE may then execute the RRC connection establishment procedure. In some embodiments, the establishment procedure happens after completion of the RRC query procedure and the PSP selection. On the other hand, if after evaluating the PSPs the UE decides not to access a network, the UE may choose not to establish an RRC connection.

The UE may optimize scanning and may stop scanning as soon as a most preferred PSP has been detected. The UE may also receive and store detected PSPs, and their serving NHN. If the most preferred PSP is not found, the UE may choose the next best PSP from the detected PSPs and select a respective NHN. Storing the detected PSPs, and their service NHN, may be selective. For example, the UE to may choose to store only those PSPs, and serving NHNs, for which the UE has credentials. All other NHNs may be labeled as unusable, and either stored in a separate list or deleted.

The UE may store the PSPs, and the serving NHNs, for any given amount of time. In one example, there may be a PSP counter in the SI. The counter increases whenever the PSP information is updated. The counter may be used to determine the amount of time in which the PSPs, and the serving NHNs, are stored. The UE may also decide to update information on a regular basis.

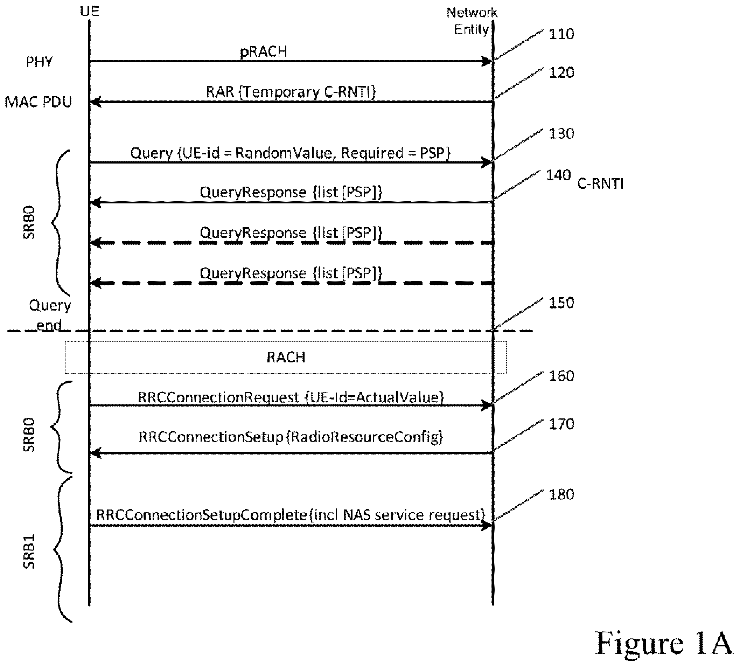

Figure 1A illustrates a signal flow diagram according to certain embodiments. In particular, Figure 1A may illustrate an example of the RRC query procedure in LTE. Upon the selection of a cell by a UE, a first message (Msg1) may be sent from the UE to a network entity in the physical layer (PHY) as a random access procedure, or as a part of the random access procedure. In step 110, an LTE physical random access channel (PRACH) may be used to carry random access preambles from the UE to the network entity to initiate a random access procedure.

In step 120, a network entity may detect the preambles sent through the PRACH. The network entity may be a network node or a base station, such as, an evolved NodeB (eNB). The network entity can then send a second message (Msg2) known as a random access response (RAR) to the UE as a media access control protocol data unit (MAC PDU). The signaling of RAR may be identified by a Random Access Radio Network Temporary Identifier (RA-RNTI), which any given UE having transmitted a random access preamble may decide to receive and decode. The network entity can also assign initial resources inside RAR, for the use of Signaling Radio Bearer 0 (SRBO) to the UE. The initial resources can be used for the identification of a request for the query in a third message (Msg3). This initial allocation may allow the UE to use SRBO on the Common Control Channel (CCCH) with the radio link control (RLC) in a transparent mode. In addition, the network entity may have included in the RAR a temporary cell radio network temporary identity (C-RNTI), which is then used for the following resource allocations for the UE.

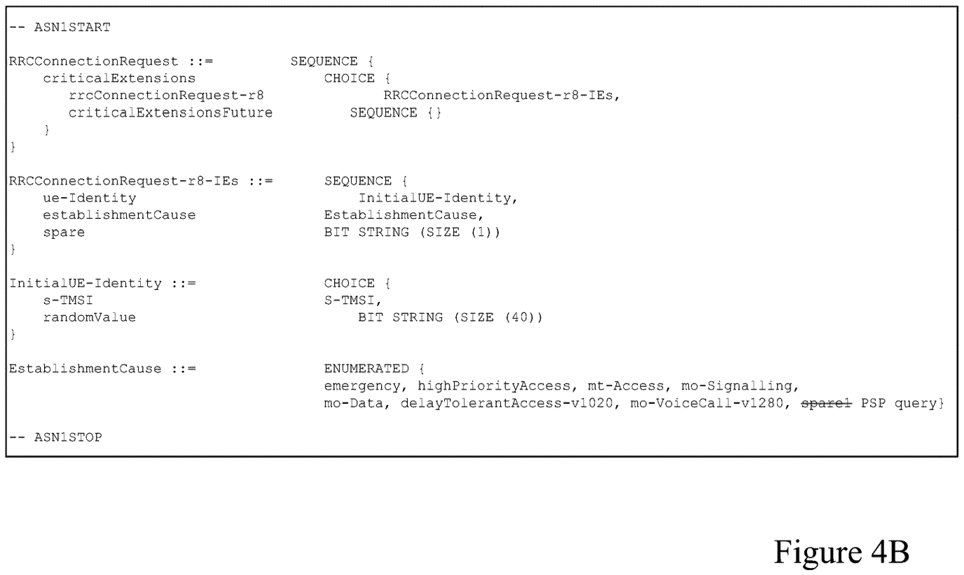

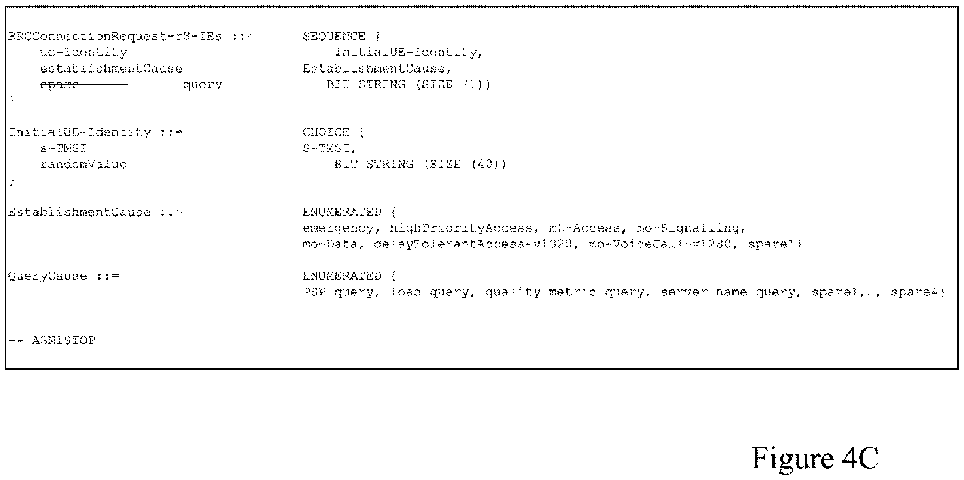

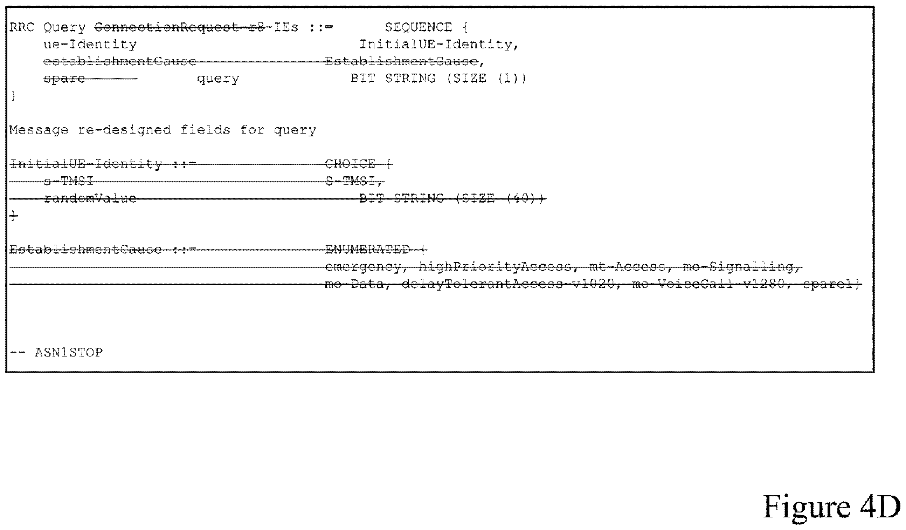

As described above, the network entity can allocate initial resources, such as SRBO, for the identification of the query protocol. In certain embodiments in responding to the RAR, instead of sending a RRC Connection request in Msg3 the UE may choose to send an RRC query message as a request of query to the network entity in step 130. Examples of how the RRC Connection request message may be varied to produce an RRC query message are explained in Figures 4B, 4C, and 4D. In certain embodiments, a query is a variant of the RRC Connection request message, which identifies the query instead of the connection request. As such, in certain embodiments, the query message may be a pre-association message. Pre-association message may mean that a UE is communicating with the network via a random UE identity (UE-ID), and therefore the communication is expected to be temporary and the RRC Connection will not yet be setup or established. This kind of temporary connection of the UE and the network may be light, and may not lead the UE to enter an RRC connected state or an LTE connected state. The UE being in a pre-association state to the access network can remain invisible and unknown to the core network.

Pre-association can also mean that the query message is being sent for the UE before the RRC connection is established. For example, a pre-association message can be a message sent before any RRC connection is established, or when a device is in an RRC unconnected state. Alternatively, pre-association may mean that a dedicated resource allocation by a UE identity may not be required for the query to be sent, while the resource allocation may happen by the temporary C-RNTI given in the RAR. The SRBO is an initial or temporary allocation, and may not be part of the dedicated resource allocation by the network entity. In yet another embodiment, pre-association may mean that a previous RRC connection may have been disconnected, and that the query can be sent before a new RRC connection has been established. Pre-association can also mean that the query request message is sent by the UE before the UE has selected a PSP. Further, pre-association may mean that the UE is known by the network by its random UE-ID instead of its actual UE-ID.

In certain embodiments, the exchange of radio resource control query request message and the radio resource control query response message may mean that UE can be pre-associated to a network element, or the UE can be in a pre-association state, or that the UE can be in light RRC connection state or a similar state. In particular, the exchange of radio resource control query request message and the radio resource control query response may mean that UE may not in the RRC Connected state with the network element, at least not fully. Further, pre-association may also mean that UE may not be in an LTE connected state with the network.

In step 130, the UE sends a RRC query request message to the network entity. The RRC query request message may be a pre-association message. In certain embodiments, the RRC query will include a random UE identifier (UE-ID). The random UE-ID can be used because the UE-ID may not be known without first selecting the serving PSP. This is because a UE-ID falls within the scope of a Service Provider, and the UE would not know which UE-ID to use until it has selected a PSP. The network entity may use this random UE-ID received by the UE when responding to the query. In some embodiment, however, the use of random UE-ID in the query response is not present.

The query request message can include a request for information that can allow the UE to select a service provider. For example, the information may take the form of a list of long format PSP names. Obtaining such a list may allow the UE to select a PSP from the list of PSPs. The UE may then use the selected PSP to authenticate and access the network. In other embodiments, the UE may request that the PSPs available in a network be sent in any other form, which is not limited to a list. A UE may attempt to access and/or authenticate the network incorrectly, which may lead to a failing of the authentication and/or accessing the network. A query for information that will allow the UE to select a service provider can facilitate the successful access and authentication of a network, and prevent any incorrect attempts to gain access to the network.

In certain embodiments, the query request message may include a request for a query type. The query type may be the form in which the UE would like to receive the PSP information. For example, the query type may be a complete list of long format PSPs. The network entity can use the query type in order to format the query respond message sent to the UE. If the query type is a complete long format PSP list, the network entity may respond by sending a complete long format PSP list to the UE, as shown in step 140.

A PSP list may, in certain embodiments, include a full name of a service provider that takes the form of string characters psp_long_name. In another embodiment, the PSP name may be split to fields forming the name, such as, psptext 1, text2, or text3. A PSP name may also include a domain name, for example, psptext domain. In some of the above described embodiments, the PSP name may be represented as psp_long_name, psptext1 .text2.text3, or psptext@domain.

In some embodiments, the PSP list may be represented as {Nb of list elements List {length of element | PSP name} . In other embodiments, the list may be represented as {Nb of list elements List {length of element | PSP name} first list / continued list /last list}. The PSP list may take any other form, and is not limited to the above examples.

When the query request message is an RRC query request message, the query response message may also include the random UE-ID received by the network entity in step 130. In a certain embodiment of the invention, a query response message may not include a UE-ID. An RRC message may include a Transaction identifier. In such an embodiment, the RRC query response message may include the same Transaction identifier to identify that the messages are part of the same procedure. In addition, a query type may be included.

The Transaction identifier may bind a query response message to a query request message. The query request message and the query response message may therefore both include the Transaction identifier. The Transaction identifier may change in each query request or query response message that is exchanged.

In some embodiments, a transaction identifier and/or a message type may not bepresent in the message. In other embodiments, the query can be identified as a Cause field or as a set of Cause fields for a query request message that may be present in Msg3.

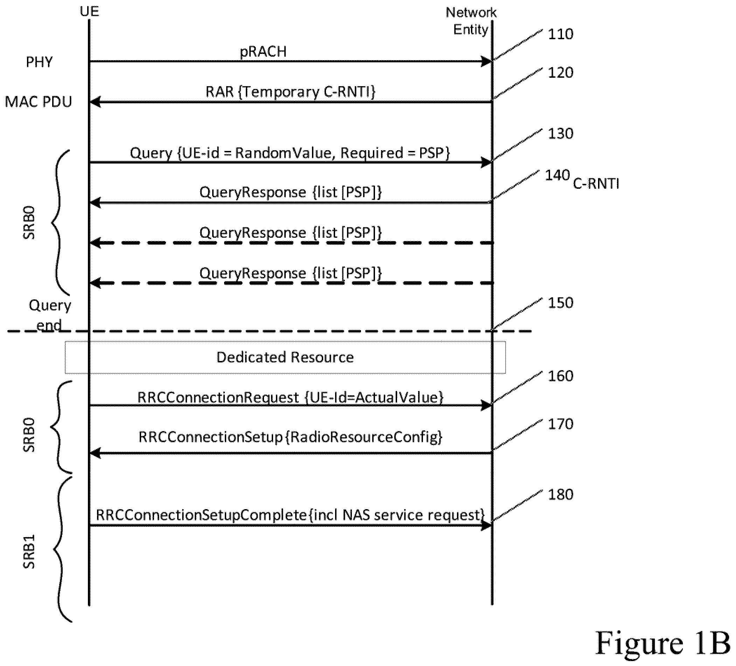

As can be seen in Figure 1, the query request message and query response message can be exchanged between the UE and the network entity, and may be sent as RRC Msg3 and Msg4, respectively. Because the temporary C-RNTI is already available to the UE, hybrid automatic repeat request (HARQ) may be used. Using HARQ may increase the reliability of the query request messages. For example, as compared to the SI broadcast without HARQ, HARQ of Msg3 and MSg4 may significantly increase reliability of the message transport. HARQ further provides adaptation to the link formats and link quality for improved efficiency of the message transport. For example, HARQ may be used in an embodiment of the random access procedure in which two UEs select the same PRACH sequence to be used in the same RACH resource. Selecting the same PRACH sequence may create a contention in Msg3 between UEs. Despite the contention, the network entity may respond to at least one of the UE query request messages by placing the random UE-ID present in Msg3 in order to resolve the contention.

In certain embodiments, the network entity may allocate uplink resources, using the temporary C-RNTI for the RRC Connection Request, after the transmission of the query response message has been completed. If the UE decides not to establish an RRC connection, and not to initiate an RRC Connection Request to a given network, the waste of allocated resources can be minimal.

In some embodiments, the query request message may be part of a NAS procedure, instead of the RRC procedure. NAS message delivery, however, may not be possible without first executing an RRC Connection Request or an RRC Connection Setup on SRBO, and the execution of an RRC Connection Setup Complete on SRB1. However, having to execute an RRC Connection Setup may be onerous because it can lead to setting up the full UE context in the network node, In addition, executing an RRC Connection Setup may include setting up the EPS-bearer and user plane (U-plane) interfaces to the core network. On the other hand, using RRC procedure and only SRBO resources for the query protocol may allow for a lighter handling of UE context in the network entity without the need for any core network interactions.

For example, a lighter RRC operation may include one or more of the following relaxations: a Radio Link Control protocol operated in the transparent mode, a common control channel being used, a signalling radio bearer type zero being used, a security mode not being established, or a dedicated radio resource not being configured. A dedicated radio resource that is not configured, for example, may include no mobility configuration, no measurement object, and/or no measurement reporting. An example of radio resources that is not configured may include a lack of uplink scheduling reference signals and/or a lack of uplink control channels.

In step 140 of Figure 1, the network entity can respond to the query request message, and send a query response message. The query response message may also be a pre-association message, and may include, in certain embodiments, a full list of PSP names, for example, PSP-IDs having a long format. Each individual PSP-ID in the PSP list may be of variable length. There can also be any number of PSP-IDs in a list. In some embodiments, the network entity may decide to include only a single PSP in a query response message. This decision to include only one PSP may depend on various factors, including, for example, the PSP length and the capacity or coverage the network entity wants to use for the message.

In other embodiments, the network entity may decide whether to send one PSP list in a single query response message, or whether to send multiple query response messages, each including a PSP list. In certain embodiments, a single query response message may include a full and complete list of PSPs that may not be fragmented. As can be seen in step 140 of Figure 1, in some embodiments the network entity may choose to split the PSPs list into multiple query response messages. For example, in step 140 three query response messages are sent from the network entity to the user equipment. The network entity may decide to split the PSPs list into multiple query response messages, each including a partial PSPs list, because the RLC of SRBO may not support segmentation when the RLC PDUs are in a transparent mode.

When sending multiple query response messages, information about whether the partial PSPs list included in one query response message can be continued with the next PSPs list received by the UE in the next query response message can be coded in the Abstract Syntax Notation One (asn.1) format and placed into the message. Information about where a delivery of PSPs list ends, meaning which query response message contains the last set of the PSPs list, can also be included in the asn.1. The asn.1. notation may provide a self-explanatory description of the contents of each message in the form of a single PSP or a PSP list. The asn. 1. notation may also provide information about whether the message is a continuation or an ending of a list, and whether this indication is conditional or optional.

In certain embodiments, the network entity may decide in which order to structure and/or deliver the one or more PSPs listed in the PSPs list and/or in which order and how many of the PSPs to structure to deliver in each of the one or more query response messages. For example, the network may prioritize different PSPs based on mutual agreements. In some embodiments, if the PSP list is split into multiple query response messages, the UE may not receive the query response messages in the same order that the network entity transmitted them, or had intended the UE to receive them. When the query response messages include a self-explanatory description of the contents in each message, the UE may receive the messages in any order without confusion, and the UE may decide to terminate reading a further response message at any time without confusion.

To prevent potential out of order reception of the PSPs from causing confusion for the UE, the query response message may include self-decodable PSP list information elements. The information elements may be used by the UE to put together the PSP list in the order in which the query response messages were sent, or in the order intended by the network entity, or in any order provided over the transmission link. In addition, the last query response message may include an indication that this particular query response message is the last query response message. After the last query response message is received, the query protocol can end in step 150.

Once the UE receives the PSP list, the UE may select a preferred service provider from the PSP list. If the UE receives a preferred service provider in a not yet completed query response, the UE may still select the service provider and attempt the access, as the PSP lists can be self-explanatory and complete through the coding in any query response message. Alternatively, after receiving the complete query response, the UE may decide not to select any of the PSPs supported by the network, and choose not to connect to the network. The UE may then decide to continue searching other networks. The UE may store the response list for future use, bound to the NHN from which the response was received, as discussed above. If, for example, most preferred PSP were not found, UE may re-visit responses and choose the best available PSP and NHN. Also, in the case when PSP was found, the UE may store the relationship of NHN and the found PSP. In some embodiments, the UE may keep the list of the most visited, the most used, and/or the last used number of NHNs with the PSPs UE used in each of them.

As discussed above, in certain embodiments the query request message and the query response messages are sent and received when the UE is not yet in the RRC connection state, thereby allowing the messages to be pre-association messages. After the query protocol ends in 150, a RACH procedure may be conducted as shown in Figure 1, and the network entity may allocate additional uplink Msg3 resources using the temporary C-RNTI to identify an opportunity for the UE to make a RRC Connection request. The RRC Connection Request may then be sent from the UE to the network entity, as shown in step 160. In some embodiments, the PSP may not be visible until the UE runs the authentication with the NAS, at which point the NHN, for example, the NHN mobility management entity, may learn of the identity of the selected PSP. The RAN, on the other hand, may in certain embodiments not learn of the selected PSP identity. The UE may know that this allocation is for the RRC Connection request because there is no need for such an uplink resource otherwise, and also because the RRC query response is announced to have ended in the downlink. In step 170, the network entity may send the UE an RRC Connection Setup, including a radio resource configuration. The Radio Resource Configuration may include dedicated resource configurations for the full connection setup.

In step 180, the UE will send an RRC Connection Setup Complete message to the network node using SRB1, at which point the RRC connection can be fully established. The RRC Connection Setup Complete message may include an embedded NAS service request with identities, so that the core network service can be established, and the UE can transition to the LTE connected state. The RRC Connection Setup Complete may carry an NAS message that may include identification of the selected PSP among other information elements. The identification of the PSP selected can be direct or indirect, as long as the relationship of the selected PSP to the actual PSP can be clear and unique. For example, the UE may include in the NAS service request the number or code of the PSP, if such a number or code is delivered along the PSP list in the query response message. Otherwise, the UE may append the full PSP name to the NAS Service request.

The UE identity for the NAS service request can be placed in the RRC Connection request as an actual UE-ID. In certain embodiments, where the UE uses the temporary C-RNTI in the RRC Connection request and places the actual UE-ID to the fields of the NAS service request together with the PSP name. The UE, in certain embodiments, may also include a format of a uniform resource name by appending the PSP name or PSP domain name with the UE identity name.

In certain embodiments while the UE and the network entity participate in the query protocol, the RRC connection would not have been established. The network entity may allocate a dedicated PRACH sequence in the downlink control information (DCI) for the RRC Connection right at or after the query response message is sent. The UE using the dedicated PRACH sequence may avoid using the RACH procedure, and lets the network entity allocate Msg3 for the RRC Connection Request. For example, messages 110 and 120 will not have to be repeated again after the query protocol. This dedicated preamble or PRACH sequence may have a specified validity time, which is defined in a standard and/or may be defined in a form of validity window equation. The validity window equation may include parameters such as transmit resource instances, a number of transmit resource instances or a real time validity value, for example in units of milliseconds. The validity window equation may also include factors that are dependent on the Listen-Before-Talk success of transmitting a preamble. In an embodiment in which the UE decides not to attempt access the network via the dedicated PRACH sequence during its validity time window, the network entity may not allocate Msg3 resources, and can remove all context for the UE under its stored random UE-ID, as previously discussed. When the UE does not use the dedicated resource, the network may take such lack of use as a sign to remove the UE context under the random UE-ID, and assume that the UE disconnected.

In some embodiments, if the UE after the expiration of the dedicated PRACH sequence still decides to attempt to access the network, the UE may execute a RACH procedure with a random preamble, upon making the decision to access the network, and send an RRC Connection Request in the following Msg3 allocated by the network in a RAR. This can resemble a new UE RRC Connection request. However, the UE may now have the knowledge of the offered PSP obtained in the preceding query, and therefore the UE may execute the RRC Connection Request, RRC Connection setup, and RRC Connection Setup Complete with its actual UE-ID and with the selected PSP, as opposed to the random UE-ID. In an embodiment, the actual UE-ID and the selected PSP are in use in the NAS procedure, and can have no impact to the RRC procedure, although delivered therein.

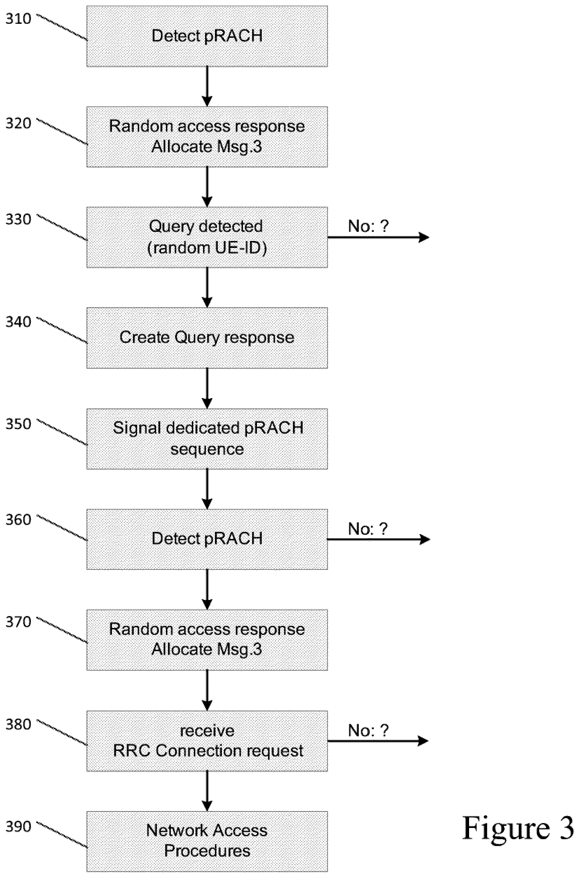

As explained above, after the query protocol ends there may be several different alternatives. In certain embodiments the network allocates dedicated resources where the UE may place a Msg3 RRC Connection Request. In other embodiments, the network may allocate a dedicated preamble, which the UE may use in the RACH resources. Such an embodiment may help to avoid potential. In yet another embodiment, the UE may execute a random access procedure with a random preamble after the query, as shown in steps 360 and 370 of Figure 3.

In other embodiments, the UE may need to explicitly signal its decision not to establish an RRC connection, and to leave the cell. In some embodiments, the network entity may run a timer during which the UE can be expected to signal the network entity of its intentions to establish an RRC connection. If no such signal is received by the network entity before the expiration of the timer, the UE context under the random UE-ID can be removed.

Figure 1B illustrates a signal flow diagram according to certain embodiments. In Figure 1B, after the query ends in step 150, the network entity may allocate dedicated resources. In certain embodiments, the network entity may allocate a dedicated PRACH sequence in the downlink control information (DCI) for the RRC Connection. The UE using the dedicated PRACH sequence may avoid using the RACH procedure, and lets the network entity allocate Msg3 for the RRC Connection Request. In such an embodiments, messages 110 and 120 may not have to be repeated again after the query ends in step 150, and steps 360 and 370 in Figure 3 may be bypassed.

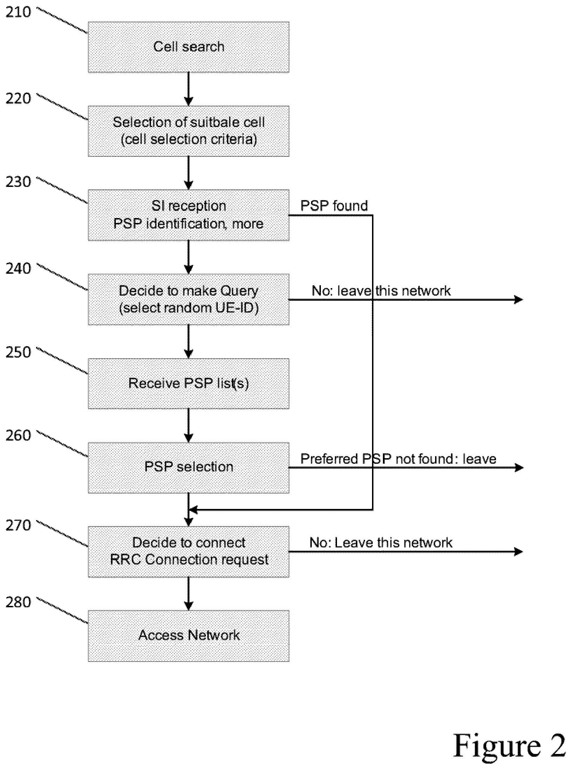

Figure 2 illustrates a flow diagram according to certain embodiments. In particular, Figure 2 illustrates a query mechanism using an RRC protocol. In step 210, the UE searches for a cell with which to establish an RRC connection. In certain embodiments, the UE may attempt to connect to an LTE base network operating in an unlicensed band. The network may be capable of serving non-mobile network operator (non-MNO) service providers. In step 220, the UE selects a suitable cell based on cell selection criteria. Cell selection criteria, for example, may include one or more of signal thresholds, signal quality thresholds, interference thresholds, signal to interference thresholds, or any combination thereof. Cell class, network identities, and/or access barring codes, may also be used as criteria for UE assessment of the suitability of a given cell. The cell suitability criteria may be standardized, for example, according to 3GPP.

The UE may then receive SI from the selected cell, as shown in step 230. In certain embodiments the SI may include a partial list of PSP identifications, or short form PSP identifications. If the PSP identifications provided in the SI is sufficient for the UE to select a PSP, the UE may move to step 270 and decide whether to establish an RRC connection.

In certain embodiments, however, the PSP information included in the SI may not be sufficient. In such an embodiment, the UE may decide to send a radio resource control query request message, such as a pre-association request message, to a network entity, as shown in step 240. Alternatively, the UE may device to leave the network, and to not connect to the selected cell. The query request, in certain embodiments, may include a request for a list of service providers. Specifically, the UE may request a complete list of long format identifications of the PSPs. The UE may also select a random UE-ID, and add the random UE-ID to the pre-association query request message.

In step 250, the UE may receive a query response message in response to the radio resource control query request message sent in step 240. In certain embodiments, the query response message may include a complete list of PSPs. As shown in Figure 1, the query response message may be a single message containing a complete list of PSPs, or more than one query response message, each message containing a fragment or a part of the complete list of PSPs. The last query response message may contain an indication that informs the UE that it is the last query response message. In certain embodiments, the size of the query request message may be limited to avoid segmentation of the request. In addition, the size of the query request message may be limited to accommodate RRC Msg3 requirements. From a resource management perspective, the query request message may be similar, or in some embodiments identical, to the RRC Connection Request message.

Upon reception of the query response message, the UE may then select a service provider, as shown in step 260. In embodiments in which the query response message includes a list of PSPs, the UE may select the service provider from the list of PSPs. In certain embodiments, after evaluating the PSP list the UE may determine that the list does not contain a preferred service provider. The UE can then decide to leave without establishing an RRC connection. In yet another embodiment, if the UE does not select a preferred service provider, it may decide and subsequently send an additional RRC query request to the network entity.

In step 270, on the other hand, the UE may decide to establish an RRC connection, and to send an RRC Connection Request to the network entity. The UE may include its actual UE-ID for the selected service provider into the RRC connection request message and/or may further indicate the selected PSP in the RRC Connection Setup Complete message. In an alternative embodiment, where the UE has C-RNTI, and generates an RRC Connection request including C-RNTI, the UE can indicate the actual UE-ID valid for a PSP, and the selected PSP inside the NAS service request Information Elements. In step 280 the RRC connection is established as described above, and the UE may access the NAS network through the selected service provider. Alternately, even after selecting a service provider the UE may device to leave before establishing an RRC connection.

Figure 3 illustrates a flow diagram according to certain embodiments. In particular, Figure 3 illustrates a query mechanism using RRC protocol. In step 310, a network entity, for example, an eNB, may detect a PRACH used to carry random access preambles from the UE. In step 320, the network entity may respond to the detected PRACH by sending a random access response to the UE. The random access response may include an assignment of initial resources, such as SRBO, to the UE for the query request message.

In certain embodiments, the network may receive from the UE a radio resource control query request message, as shown in step 330, for example, a pre-association RRC query request message. In certain embodiments, the query request message may include a request for a list of PSPs. The query request message can also include a random UE-ID, and may include a request for a complete list of long form PSPs identifications. In step 340, the network entity may create and send to the UE a query response message in response to the pre-association radio resource control query request message. The query response message can include the requested list of PSPs. As shown in step 140 of Figure 1, there may be one or more query response messages. In some embodiments, a single query response message can include the complete list of long format identifications of PSPs. In other embodiments, the complete list may be split into more than one query response message. The last query response message may include an indication that identifies the query response message as the last segment, and releases SRBO resources for the session. This release of SRBO resources may be similar to the release of resources in an RRC connection rejection.

During the sending of the query response message, or any time before or after the sending of the query response message, the network entity may signal to the UE an allocation of dedicated PRACH sequence in the DCI, as shown in step 350. The dedicated resources may be used in the PRACH resources after the query response is received by the UE. If the UE determines that it would like to establish an RRC connection, the network entity may again detect a PRACH, in step 360. In step 370, the network entity may send a RAR that allocates resources for the RRC connection request in Msg3. The UE may use these allocated resources to send an RRC Connection Request in step 380. In step 390, the network entity may connect the UE to the network via network access procedures.

In an alternative embodiment, during the sending of the query response message, or at any time before or after the sending of query response message, the network may signal to the UE an allocation of dedicated resource, other than the dedicated preamble PRACH sequence. This dedicated resource allocation may be a set of physical resource block (PRB) resource units allocated either once or repeatedly,for example, as a semi-persistent resource, for the use of Msg3. Another example of a dedicated resource may be a scheduling request signal that may be defined in a physical uplink control resource.

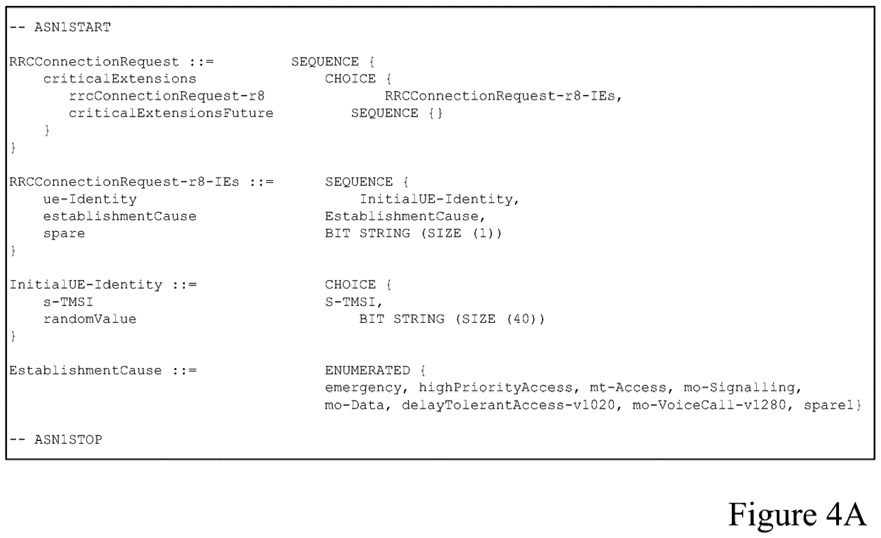

Figure 4A illustrates an embodiment of an RRC Connection Request message. Figure 4B, however, illustrates an embodiment of the RRC query. Specifically, the embodiment of Figure 4B illustrates an example of how the RRC Connection Request message can be modified to become the RRC Query request message, as shown in step 130 of Figures 1A and 1B. As can be seen in Figure 4B, the one remaining establishment cause value may be set equal to the PSP query or a query.

Figure 4C illustrates an embodiment of the RRC query. Specifically, the embodiment of Figure 4C illustrates an example of how the RRC Connection Request message can be modified to become the RRC Query request message. In certain embodiments, the spare value, outside the establishment cause, which can have a bit string size (1), may be assigned to announce the query. For example, instead of using the legacy RRC connection request Establishment Cause, the spare value may be used for the query request. In other words, the Query Cause can be applied instead of the Establishment Cause, when query is set to 1.

In the embodiment of Figure 4C, in which the spare is assigned to the query, a new set of Establishment cause values in an enumerated field may become available for the query, such as, Query Cause values. Query Cause may have eight values, if set equal to the legacy message Establishment Cause size. One value of the Query Cause may be set to PSP query. Other values may be left for other queries. Other values may include queries in relation to a load query, a quality query, or a server name query, for example.

Figure 4D illustrates an embodiment of the RRC query. Specifically, the embodiment of Figure 4D illustrates an example of how the RRC Connection Request message can be modified to become the RRC Query request message. In certain embodiments, the entire legacy RRC Connection Request message may be redesigned for the query. In certain embodiments, the spare value, outside the establishment cause, may have a bit string size equal to 1, and may be set to announce the query. In an embodiment in which the value of the bit is set to a query, this may mean that the full message content is different from the RRC Connection Request. In addition, in such an embodiment, the random UE-ID may be of different length, which may allow for bits to be assigned for the description of query subclasses.

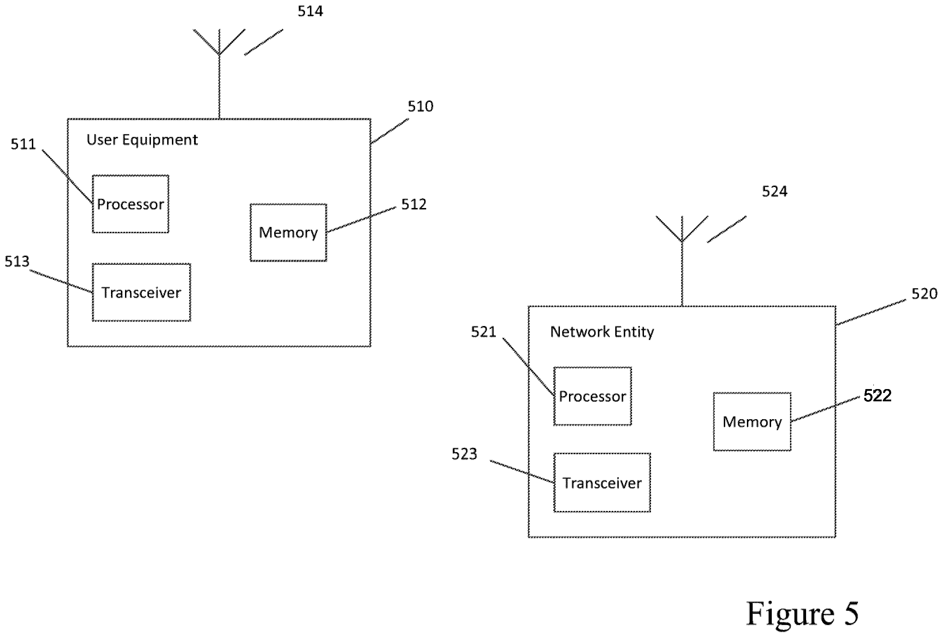

Figure 5 illustrates a system according to certain embodiments. It should be understood that each signal in Figures 1A and 1B, and each block in Figures 2 and 3, may be implemented by various means or their combinations, such as hardware, software, firmware, one or more processors and/or circuitry. In one embodiment, a system may include several devices, such as, for example, a network entity 520 or a UE 510. The system may include more than one UE 510 and more one network entity 520, although only one access node shown for the purposes of illustration. A network entity can be a network node, a base station, an eNB, server, host, or any of the other access or network node discussed herein.

Each of these devices may include at least one processor or control unit or module, respectively indicated as 511 and 521. At least one memory may be provided in each device, and indicated as 512 and 522, respectively. The memory may include computer program instructions or computer code contained therein. One or more transceiver 513 and 523 may be provided, and each device may also include an antenna, respectively illustrated as 514 and 524. Although only one antenna each is shown, many antennas and multiple antenna elements may be provided to each of the devices. Other configurations of these devices, for example, may be provided. For example, network entity 520 and UE 510 may be additionally configured for wired communication, in addition to wireless communication, and in such a case antennas 514 and 524 may illustrate any form of communication hardware, without being limited to merely an antenna.

Transceivers 513 and 523 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. The operations and functionalities may be performed in different entities, such as nodes, hosts or servers, in a flexible manner. In other words, division of labor may vary case by case. One possible use is to make a network node deliver local content. One or more functionalities may also be implemented as virtual application(s) in software that can run on a server.

A user device or user equipment 510 may be a mobile station (MS) such as a mobile phone or smart phone or multimedia device, a computer, such as a tablet, provided with wireless communication capabilities, personal data or digital assistant (PDA) provided with wireless communication capabilities, portable media player, digital camera, pocket video camera, navigation unit provided with wireless communication capabilities or any combinations thereof.

In some embodiment, an apparatus, such as an access node, may include means for carrying out embodiments described above in relation to Figures 1A, 1B, 2, 3, 4B, 4C, and 4D. In certain embodiments, at least one memory including computer program code can be configured to, with the at least one processor, cause the apparatus at least to perform any of the processes described herein.

According to certain embodiments, an apparatus 510 may include at least one memory 512 including computer program code, and at least one processor 511. The at least one memory 512 and the computer program code are configured, with the at least one processor 511, to cause the apparatus 510 at least to send from a user equipment a radio resource control query request message to a network entity. The at least one memory 512 and the computer program code are configured, with the at least one processor 511, to also cause the apparatus 510 at least to receive at the user equipment a query response message in response to the radio resource control query request message. In addition, the at least one memory 512 and the computer program code are configured, with the at least one processor 511, to cause the apparatus 510 at least to select at the user equipment a service provider based on the query response message.

According to certain embodiments, an apparatus 520 may include at least one memory 522 including computer program code, and at least one processor 521. The at least one memory 522 and the computer program code are configured, with the at least one processor 521, to cause the apparatus 520 at least to receive from a user equipment a radio resource control query request message. The at least one memory 522 and the computer program code are configured, with the at least one processor 521, to also cause the apparatus 520 at least to send from a network entity to the user equipment a query response message in response to the radio resource control query request message.

Processors 511 and 521 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors.

For firmware or software, the implementation may include modules or unit of at least one chip set (for example, procedures, functions, and so on). Memories 512 and 522 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions which may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as network entity 520 or UE 510, to perform any of the processes described above (see, for example, Figures 1A, 1B, 2, and 3). Therefore, in certain embodiments, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain embodiments may be performed entirely in hardware.

Furthermore, although Figure 5 illustrates a system including an network entity 520 and UE 510, certain embodiments may be applicable to other configurations, and configurations involving additional elements, as illustrated and discussed herein. For example, multiple user equipment devices and multiple network entities may be present, or other nodes providing similar functionality, such as nodes that combine the functionality of a user equipment and a network entity, such as a relay node. The UE 510 may likewise be provided with a variety of configurations for communication other than communication network entity 520. For example, the UE 510 may be configured for device-to-device communication.

Certain embodiments allow for a pre-association query mechanism using extended RRC protocol. Two new SRBO messages may be incorporated into a RRC protocol, including an RRC query request and an RRC query response message. The query mechanism can be used in all cases in which the UE needs to collect information from the network before attaching to the network, for example, a list of service providers. In addition, the query protocol may be undergone before or without the establishment of a RRC connection. The query protocol may also be compatible with an LTE network operating in an unlicensed band that is capable of serving non-MNO service providers.

The features, structures, or characteristics of certain embodiments described throughout this specification may be combined in any suitable manner in one or more embodiments. For example, the usage of the phrases "certain embodiments," "some embodiments," "other embodiments," or other similar language, throughout this specification refers to the fact that a particular feature, structure, or characteristic described in connection with the embodiment may be included in at least one embodiment of the present invention. Thus, appearance of the phrases "in certain embodiments," "in some embodiments," "in other embodiments," or other similar language, throughout this specification does not necessarily refer to the same group of embodiments, and the described features, structures, or characteristics may be combined in any suitable manner in one or more embodiments.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention.

### Partial Glossary

- LBT: Listen-Before-Talk
- LTE: 3GPP Long Term Evolution Technology
- MAC: Medium Access Control
- UE: User Equipment
- RRC: Radio Resource Control
- eNB: evolved Node B
- PDU: Protocol Data Unit
- pRACH: physical Random Access Channel
- PSP: Participating Service Provider
RAR Random Access Response
- SI: System Information
- SRB: Signaling Radio Bearer
- RLC: Radio Link Control
- PDU: Protocol Data Unit
- RAN: Radio Access Network
- LBT: Listen-Before-Talk
- LTE: 3GPP Long Term Evolution Technology
- MAC: Medium Access Control
- UE: User Equipment
- RRC: Radio Resource Control
- eNB: evolved Node B
- PDU: Protocol Data Unit
- pRACH: physical Random Access Channel
- PSP: Participating Service Provider
- RAR: Random Access Response
- SI: System Information
- SRB: Signaling Radio Bearer
- RLC: Radio Link Control
- PDU: Protocol Data Unit
- RAN: Radio Access Network

## Claims

1. A method comprising:
sending (130) from a user equipment a radio resource control query request message to a network entity of a neutral host network;
receiving (140) at the user equipment a query response message including a list of service providers in response to the radio resource control query request message;
wherein signaling radio bearer resources of signaling radio bearer 0 are used for the query request message and the query response message;
selecting at the user equipment a service provider based on the query response message; and
sending (160) from the user equipment to the neutral host network a radio resource control request including a cell radio network temporary identity and indicating a user equipment identification for the selected service provider in a non-access stratum service request information element.

2. The method according to claim 1, wherein the query request message includes a request for a list of service providers.

3. The method according to any one of claims 1 to 2, wherein the user equipment selects a service provider from the list of service providers.

4. The method according to claim 2, wherein the list of service providers includes a complete list of long form identifications of the service providers.

5. The method according to any one of claims 1 to 4, further comprising:
selecting a random user equipment identification; and
adding the random user equipment identifier to the query request message.

6. The method according to any one of claims 1 to 5, wherein the radio resource control query request message is a pre-association request message, and wherein the pre-association request message does not require dedicated resource allocation.

7. The method according to any one of claims 1 to 6, further comprising:
initiating random access procedures to have a signaling radio bearer resource allocated for use in the sending of the query request message.

8. The method according to any one of claims 1 to 7, further comprising:
receiving system information at the user equipment, wherein the system information does not contain sufficient information related to the service providers.

9. The method according to claim 2, further comprising:
receiving at least one additional query response message, including the remaining list of the service providers, when the query response message did not include a complete list of the service providers.

10. The method according to any one of claims 1 to 9, wherein the user equipment operates in an unlicensed band.

11. The method according to any one of claims 1 to 10, further comprising:
receiving an allocation of dedicated resources, other than the dedicated preamble physical random access channel sequence; and
sending a radio resource control message to the network entity utilizing the dedicated resources after the selection of the service provider.

12. A method comprising:
receiving (130) from a user equipment a radio resource control query request message at a network entity of a neutral host network;
sending (140) from the network entity to the user equipment a query response message including a list of service providers in response to the radio resource control query request message;
wherein signaling radio bearer resources of signaling radio bearer 0 are used for the query request message and the query response message; and
receiving (160) from the user equipment at the network entity a radio resource control request including a cell radio network temporary identity and indicating a user equipment identification for the selected service provider in a non-access stratum service request information element.

13. An apparatus (510) comprising:
at least one memory (512) comprising computer program code;
at least one processor (511);
wherein the at least one memory (512) and the computer program code are configured, with the at least one processor (511), to cause the apparatus (510) at least to:
send from a user equipment a radio resource control query request message to a network entity of a neutral host network;
receive at the user equipment a query response message including a list of service providers in response to the radio resource control query request message;
wherein signaling radio bearer resources of signaling radio bearer 0 are used for the query request message and the query response message;
select at the user equipment a service provider based on the query response message; and
send from the user equipment to the neutral host network a radio resource control request including a cell radio network temporary identity and indicating a user equipment identification for the selected service provider in a non-access stratum service request information element.

14. An apparatus (520) comprising:
at least one memory (522) comprising computer program code;
at least one processor (521);
wherein the at least one memory (522) and the computer program code are configured, with the at least one processor (521), to cause the apparatus (520) at least to:
receive from a user equipment a radio resource control query request message at a network entity of a neutral host network; and
send from the network entity to the user equipment a query response message including a list of service providers in response to the radio resource control query request message;
wherein signaling radio bearer resources of signaling radio bearer 0 are used for the query request message and the query response message; and
receive from the user equipment at the network entity a radio resource control request including a cell radio network temporary identity and indicating a user equipment identification for the selected service provider in a non-access stratum service request information element.

15. A computer program product for a computer, comprising software code portions for performing the steps of any one of claim 1 to 12 when said product is run on the computer.

## Patentansprüche

1. Verfahren, das Folgendes umfasst:
Senden (130) einer Abfrageanforderungsnachricht für die Funkressourcensteuerung durch eine Teilnehmereinrichtung an eine Netzwerkentität eines neuronalen Hostnetzwerks;
Empfangen (140) einer Abfrageantwortnachricht, die eine Liste von Dienstanbietern beinhaltet, an der Teilnehmereinrichtung in Reaktion auf die Abfrageanforderungsnachricht für die Funkressourcensteuerung;
wobei für die Abfrageanforderungsnachricht und die Abfrageantwortnachricht Signalisierungsfunkträgerressourcen von Signalisierungsfunkträger 0 verwendet werden;
Auswählen eines Dienstanbieters an der Teilnehmereinrichtung auf Basis der Abfrageantwortnachricht; und
Senden (160) einer Funkressourcensteueranforderung, die eine temporäre Zellfunknetzwerkkennung beinhaltet und eine Teilnehmereinrichtungsidentifikation für den ausgewählten Dienstanbieter in einem Dienstanforderungsinformationselement der Nichtzugangsschicht anzeigt, von der Teilnehmereinrichtung an das neuronale Hostnetzwerk.

2. Verfahren nach Anspruch 1, wobei die Abfrageanforderungsnachricht eine Anforderung einer Liste von Dienstanbietern beinhaltet.

3. Verfahren nach einem der Ansprüche 1 bis 2, wobei die Teilnehmereinrichtung einen Dienstanbieter aus der Liste von Dienstanbietern auswählt.

4. Verfahren nach Anspruch 2, wobei die Liste von Dienstanbietern eine vollständige Liste von Identifikationen der Dienstanbieter in Langform beinhaltet.

5. Verfahren nach einem der Ansprüche 1 bis 4, das ferner Folgendes umfasst:
Auswählen einer zufälligen Teilnehmereinrichtungsidentifikation; und
Hinzufügen der zufälligen Teilnehmereinrichtungskennung zur Abfrageanforderungsnachricht.

6. Verfahren nach einem der Ansprüche 1 bis 5, wobei die Abfrageanforderungsnachricht für die Funkressourcensteuerung eine Vorverknüpfungsanforderungsnachricht ist und wobei die Vorverknüpfungsanforderungsnachricht keine dedizierte Ressourcenzuteilung erfordert.

7. Verfahren nach einem der Ansprüche 1 bis 6, das ferner Folgendes umfasst:
Initiieren von Direktzugriffsprozeduren, damit eine Signalisierungsfunkträgerressource zur Verwendung beim Senden der Abfrageanforderungsnachricht zugeteilt wird.

8. Verfahren nach einem der Ansprüche 1 bis 7, das ferner Folgendes umfasst:
Empfangen von Systeminformationen an der Teilnehmereinrichtung, wobei die Systeminformationen keine die Dienstanbieter betreffenden ausreichenden Informationen beinhalten.

9. Verfahren nach Anspruch 2, das ferner Folgendes umfasst:
Empfangen von mindestens einer zusätzlichen Abfrageantwortnachricht, die die verbleibende Liste der Dienstanbieter beinhaltet, wenn die Abfrageantwortnachricht keine vollständige Liste der Dienstanbieter beinhaltete.

10. Verfahren nach einem der Ansprüche 1 bis 9, wobei die Teilnehmereinrichtung in einem nicht lizenzierten Band betrieben wird.

11. Verfahren nach einem der Ansprüche 1 bis 10, das ferner Folgendes umfasst:
Empfangen einer Zuteilung von anderen dedizierten Ressourcen als der physischen Direktzugriffskanalsequenz der dedizierten Präambel; und
Senden einer Funkressourcensteuernachricht unter Verwendung der dedizierten Ressourcen nach der Auswahl des Dienstanbieters an die Netzwerkentität.

12. Verfahren, das Folgendes umfasst:
Empfangen (130) einer Abfrageanforderungsnachricht für die Funkressourcensteuerung durch eine Teilnehmereinrichtung an einer Netzwerkentität eines neuronalen Hostnetzwerks;
Senden (140) einer Abfrageantwortnachricht, die eine Liste von Dienstanbietern beinhaltet, von der Netzwerkentität an die Teilnehmereinrichtung in Reaktion auf die Abfrageanforderungsnachricht für die Funkressourcensteuerung;
wobei für die Abfrageanforderungsnachricht und die Abfrageantwortnachricht Signalisierungsfunkträgerressourcen von Signalisierungsfunkträger 0 verwendet werden; und
Empfangen (160) einer Funkressourcensteueranforderung, die eine temporäre Zellfunknetzwerkkennung beinhaltet und eine Teilnehmereinrichtungsidentifikation für den ausgewählten Dienstanbieter in einem Dienstanforderungsinformationselement der Nichtzugangsschicht anzeigt, an der Netzwerkentität von der Teilnehmereinrichtung.

13. Vorrichtung (510), die Folgendes umfasst:
mindestens einen Speicher (512), der einen Computerprogrammcode umfasst;
mindestens einen Prozessor (511);
wobei der mindestens eine Speicher (512) und der Computerprogrammcode dazu ausgelegt sind, die Vorrichtung (510) mit dem mindestens einen Prozessor (511) mindestens zu Folgendem zu veranlassen:
Senden einer Abfrageanforderungsnachricht für die Funkressourcensteuerung durch eine Teilnehmereinrichtung an eine Netzwerkentität eines neuronalen Hostnetzwerks;
Empfangen einer Abfrageantwortnachricht, die eine Liste von Dienstanbietern beinhaltet, an der Teilnehmereinrichtung in Reaktion auf die Abfrageanforderungsnachricht für die Funkressourcensteuerung;
wobei für die Abfrageanforderungsnachricht und die Abfrageantwortnachricht Signalisierungsfunkträgerressourcen von Signalisierungsfunkträger 0 verwendet werden;
Auswählen eines Dienstanbieters an der Teilnehmereinrichtung auf Basis der Abfrageantwortnachricht; und
Senden einer Funkressourcensteueranforderung, die eine temporäre Zellfunknetzwerkkennung beinhaltet und eine Teilnehmereinrichtungsidentifikation für den ausgewählten Dienstanbieter in einem Dienstanforderungsinformationselement der Nichtzugangsschicht anzeigt, von der Teilnehmereinrichtung an das neuronale Hostnetzwerk.

14. Vorrichtung (520), die Folgendes umfasst:
mindestens einen Speicher (522), der einen Computerprogrammcode umfasst;
mindestens einen Prozessor (521);
wobei der mindestens eine Speicher (522) und der Computerprogrammcode dazu ausgelegt sind, die Vorrichtung (520) mit dem mindestens einen Prozessor (521) mindestens zu Folgendem zu veranlassen:
Empfangen einer Abfrageanforderungsnachricht für die Funkressourcensteuerung durch eine Teilnehmereinrichtung an einer Netzwerkentität eines neuronalen Hostnetzwerks; und
Senden einer Abfrageantwortnachricht, die eine Liste von Dienstanbietern beinhaltet, von der Netzwerkentität an die Teilnehmereinrichtung in Reaktion auf die Abfrageanforderungsnachricht für die Funkressourcensteuerung;
wobei für die Abfrageanforderungsnachricht und die Abfrageantwortnachricht Signalisierungsfunkträgerressourcen von Signalisierungsfunkträger 0 verwendet werden; und
Empfangen einer Funkressourcensteueranforderung, die eine temporäre Zellfunknetzwerkkennung beinhaltet und eine Teilnehmereinrichtungsidentifikation für den ausgewählten Dienstanbieter in einem Dienstanforderungsinformationselement der Nichtzugangsschicht anzeigt, an der Netzwerkentität von der Teilnehmereinrichtung.

15. Computerprogrammprodukt für einen Computer, das Softwarecodeabschnitte zum Durchführen der Schritte von einem der Ansprüche 1 bis 12, wenn das Produkt auf dem Computer ausgeführt, umfasst.

## Revendications

1. Procédé comprenant :
l'envoi (130), par un équipement utilisateur, d'un message de demande de requête de contrôle ressources radio à une entité de réseau d'un réseau hôte neutre ;
la réception (140), sur l'équipement utilisateur, d'un message de réponse à la requête comportant une liste de fournisseurs de services en réponse au message de demande de requête de contrôle ressources radio ;
dans lequel des ressources de porteuse radio de signalisation d'une porteuse radio de signalisation 0 sont utilisées pour le message de demande de requête et le message de réponse à la requête ;
la sélection, sur l'équipement utilisateur, d'un fournisseur de services sur la base du message de réponse à la requête ; et
l'envoi (160), par l'équipement utilisateur au réseau hôte neutre, d'une demande de contrôle de ressources radio comportant une identité temporaire de réseau radio cellulaire et indiquant une identification d'équipement utilisateur pour le fournisseur de services sélectionné dans un élément d'informations de demande de service de strate de non-accès.

2. Procédé selon la revendication 1, dans lequel le message de demande de requête comporte une demande d'une liste de fournisseurs de services.

3. Procédé selon l'une des revendications 1 et 2, dans lequel l'équipement utilisateur sélectionne un fournisseur de services dans la liste de fournisseurs de services.

4. Procédé selon la revendication 2, dans lequel la liste de fournisseurs de services comporte une liste complète d'identifications de formes détaillées des fournisseurs de services.

5. Procédé selon l'une des revendications 1 à 4, comprenant en outre :
la sélection d'une identification d'équipement utilisateur aléatoire ; et
l'ajout de l'identifiant d'équipement utilisateur aléatoire au message de demande de requête.

6. Procédé selon l'une des revendications 1 à 5, dans lequel le message de demande de requête de contrôle ressources radio est un message de demande de pré-association, et dans lequel le message de demande de pré-association ne nécessite pas d'attribution de ressources dédiées.

7. Procédé selon l'une des revendications 1 à 6, comprenant en outre :
l'initiation de procédures d'accès aléatoire pour disposer d'une ressource de porteuse radio de signalisation attribuée à utiliser pour l'envoi du message de demande de requête.

8. Procédé selon l'une des revendications 1 à 7, comprenant en outre :
la réception d'informations système sur l'équipement utilisateur, dans lequel les informations système ne contiennent pas suffisamment d'informations concernant les fournisseurs de services.

9. Procédé selon la revendication 2, comprenant en outre :
la réception d'au moins un message de réponse à la requête supplémentaire comportant la liste des fournisseurs de services restants, lorsque le message de réponse à la requête ne comportait pas de liste complète des fournisseurs de services.

10. Procédé selon l'une des revendications 1 à 9, dans lequel l'équipement utilisateur fonctionne dans une bande sans licence.

11. Procédé selon l'une des revendications 1 à 10, comprenant en outre :
la réception d'une attribution de ressources dédiées autre que la séquence de canal d'accès physique aléatoire à préambule dédié ; et
l'envoi d'un message de contrôle de ressources radio à l'entité de réseau utilisant les ressources dédiées après la sélection du fournisseur de services.

12. Procédé comprenant :
la réception (130), d'un équipement utilisateur, d'un message de demande de requête de contrôle ressources radio sur une entité de réseau d'un réseau hôte neutre ;
l'envoi (140), par l'entité de réseau à l'équipement utilisateur, d'un message de réponse à la requête comportant une liste de fournisseurs de services en réponse au message de demande de requête de contrôle ressources radio ;
dans lequel des ressources de porteuse radio de signalisation d'une porteuse radio de signalisation 0 sont utilisées pour le message de demande de requête et le message de réponse à la requête ; et
la réception (160), de l'équipement utilisateur sur l'entité de réseau, d'une demande de contrôle de ressources radio comportant une identité temporaire de réseau radio cellulaire et indiquant une identification d'équipement utilisateur pour le fournisseur de services sélectionné dans un élément d'informations de demande de service de strate de non-accès.

13. Appareil (510) comprenant :
au moins une mémoire (512) comprenant un code de programme informatique ;
au moins un processeur (511) ;
dans lequel l'au moins une mémoire (512) et le code de programme informatique sont configurés, avec l'au moins un processeur (511), pour amener l'appareil (510) au moins à :
envoyer, par un équipement utilisateur, un message de demande de requête de contrôle ressources radio à une entité de réseau d'un réseau hôte neutre ;
recevoir, sur l'équipement utilisateur, un message de réponse à la requête comportant une liste de fournisseurs de services en réponse au message de demande de requête de contrôle ressources radio ;
dans lequel des ressources de porteuse radio de signalisation d'une porteuse radio de signalisation 0 sont utilisées pour le message de demande de requête et le message de réponse à la requête ;
sélectionner, sur l'équipement utilisateur, un fournisseur de services sur la base du message de réponse à la requête ; et
envoyer, par l'équipement utilisateur au réseau hôte neutre, une demande de contrôle de ressources radio comportant une identité temporaire de réseau radio cellulaire et indiquant une identification d'équipement utilisateur pour le fournisseur de services sélectionné dans un élément d'informations de demande de service de strate de non-accès.

14. Appareil (520) comprenant :
au moins une mémoire (522) comprenant un code de programme informatique ;
au moins un processeur (521) ;
dans lequel l'au moins une mémoire (522) et le code de programme informatique sont configurés, avec l'au moins un processeur (521), pour amener l'appareil (520) au moins à :
recevoir, d'un équipement utilisateur, un message de demande de requête de contrôle ressources radio sur une entité de réseau d'un réseau hôte neutre ; et
envoyer, par l'entité de réseau à l'équipement utilisateur, un message de réponse à la requête comportant une liste de fournisseurs de services en réponse au message de demande de requête de contrôle ressources radio ;
dans lequel des ressources de porteuse radio de signalisation d'une porteuse radio de signalisation 0 sont utilisées pour le message de demande de requête et le message de réponse à la requête ; et
recevoir, de l'équipement utilisateur à l'entité de réseau, une demande de contrôle de ressources radio comportant une identité temporaire de réseau radio cellulaire et indiquant une identification d'équipement utilisateur pour le fournisseur de services sélectionné dans un élément d'informations de demande de service de strate de non-accès.

15. Produit de programme informatique pour un ordinateur, comprenant des portions de code logiciel pour réaliser les étapes de l'une des revendications 1 à 12 lorsque ledit produit est exécuté sur l'ordinateur.
